# EUROPEAN PATENT APPLICATION

(11) **EP 4 851 942 A1**
(43) Date of publication of application: **09.12.2026**
(21) Application number: 26182817.2
(22) Date of filing: 03.06.2026
(51) Int. Cl.: G06T 19/20, G06Q 30/0601, G06T 13/20, G06T 19/00

(54) **ARTIFICIAL INTELLIGENCE DEVICE AND METHOD FOR EXPLORING VIRTUAL PRODUCT USING THREE DIMENSIONAL OBJECT**

(30) Priority: 05.06.2025 US 202563818448 P; 14.08.2025 WO PCT/KR2025/012418
(71) Applicant: LG Electronics Inc., Yeongdeungpo-gu Seoul 07336 (KR)
(72) Inventor: CHUNG, Wooseong, San Jose, 95129 (US); SONG, Jacob, Cupertino, 95014 (US); JUNG, Jaeyoung, San Lorenzo, 94580 (US); GALVIS, Mateo, San Jose, 95130 (US)
(74) Representative: Schornack, Oliver

(57) **Abstract**

An artificial intelligence device for searching a virtual product using a three-dimensional object is disclosed. An artificial intelligence device according to one embodiment of the present disclosure may comprise a memory configured to store a three-dimensional(3D) object representing an electronic device, wherein the 3D object is a lightweight object generated based on drawing data; a display configured to display the 3D object; and a processor configured to: display an indicator corresponding to a specific location of the 3D object on the display, receive a user input for the displayed indicator, and output an interaction result with the indicator based on the received user input.

## Description

### BACKGROUND OF THE INVENTION

### 1.Field of the Invention

The present invention relates to an artificial intelligence device, and more particularly, to the artificial device for exploring a virtual product using a virtual 3D object.

### 2. Discussion of the Related Art

In the online sale and marketing environment for a product, a technology that displays the product in three dimensions is gaining attention to convey the product more intuitively to consumers.

Previously, a method was used to collect a plurality of 2D images taken from various angles, such as front/back/left/right/up/down, of the product and create a 3D model based on these images.

In the case of configuring 2D images by simply rearranging them in the prior art, there is a problem in that movements such as a rotation, an enlargement, and a reduction of a 3D object are not implemented naturally.

Furthermore, conventional technologies have limitations in visually representing a product's internal structure or an operating principle of a specific function. Consequently, it is difficult to link in real time with detailed information, such as an exploded view, a cross-section, or a functional description of a specific component.

Furthermore, while some AI-based reconstruction technologies exist, they only supplement static visual data and are limited in providing dynamic interaction. Consequently, consumers may lack the information necessary to make a purchase decision, making it difficult to intuitively assess the product's 360-degree appearance and internal structure.

### SUMMARY OF THE INVENTION

The purpose of the present disclosure may be to implement an intuitive and immersive interaction between a user and a 3D object of a product.

The purpose of the present disclosure may be to visualize not only an external shape of a product but also an internal component structure and operating principle in a 3D form.

The purpose of the present disclosure may be to provide interactive visual information by linking information such as a product specification, a functional description, and a user guide of the 3D object in real time.

The purpose of the present disclosure may be to enhance user understanding of the functional description of a product by reproducing the operating principle or the operation sequence of the internal component in real-time 3D animation.

The purpose of the present disclosure may be to provide a user interface that hierarchically displays specification information, a component name, an operation description, etc. on the 3D object and allows the user to selectively view only the information desired.

An artificial intelligence device according to one embodiment of the present disclosure may comprise a memory configured to store a three-dimensional(3D) object representing an electronic device, wherein the 3D object is a lightweight object generated based on drawing data; a display configured to display the 3D object; and a processor configured to: display an indicator corresponding to a specific location of the 3D object on the display, receive a user input for the displayed indicator, and output an interaction result with the indicator based on the received user input.

A method for searching a virtual product using a three-dimensional object of an artificial intelligence device according to one embodiment of the present disclosure, the method may comprise storing a three-dimensional(3D) object representing an electronic device, wherein the 3D object is a lightweight object generated based on drawing data; displaying the stored 3D object; displaying an indicator corresponding to a specific location of the 3D object; receiving a user input for the displayed indicator; and outputting an interaction result with the indicator based on the received user input.

A non-transitory recording medium storing computer-readable commands that, when executed by an artificial intelligence device, cause the artificial intelligence device to perform operations, according to embodiments of the present disclosure, wherein the operations comprises: storing a three-dimensional(3D) object representing an electronic device, wherein the 3D object is a lightweight object generated based on drawing data; displaying the stored 3D object; displaying an indicator corresponding to a specific location of the 3D object; receiving a user input for the displayed indicator; and outputting an interaction result with the indicator based on the received user input.

According to an embodiment of the present disclosure, a user immersion and an usability may be improved by providing immediate and natural responses according to various user inputs.

According to an embodiment of the present disclosure, a structural characteristic and the operating principle of the product may be intuitively understood, thereby increasing various uses such as product learning, education, and marketing.

According to an embodiment of the present disclosure, product information and a visual model may be synchronized in real time to shorten the information retrieval process and improve user accessibility to information.

According to embodiments of the present disclosure, a possibility of user malfunction may be reduced by increasing the understanding of a product function, and a maintenance and a training efficiency may be improved.

According to an embodiment of the present disclosure, only the information required by the user may be provided in a customized manner, thereby preventing information overload and improving UI/UX satisfaction.

### BRIEF DESCRIPTION OF THE DRAWINGS

FIG. 1 is a block diagram for illustrating elements of an artificial intelligence device according to an embodiment of the present disclosure.
FIG. 2 is a diagram for illustrating the configuration of an artificial intelligence server according to an embodiment of the present disclosure.
FIG. 3 is a flowchart illustrating a method for searching a virtual product using a three-dimensional object of an artificial intelligence device according to an embodiment of the present disclosure.
FIGS. 4 to 16 are drawings illustrating examples of controlling a 3D object based on user input according to various embodiments of the present disclosure.
FIG. 17 is a diagram illustrating a process for generating a lightweight 3D object according to one embodiment of the present disclosure.

### DETAILED DESCRIPTION OF THE PREFERRED EMBODIMENTS

Artificial intelligence refers to the field of researching artificial intelligence or methodology to create it, and machine learning refers to the field of defining various problems dealt with in the field of artificial intelligence and researching methodology to solve them.

Machine learning is also defined as an algorithm that improves the performance of a task through consistent experience.

Artificial Neural Network ANN is a model used in machine learning, it may refer to an overall model with problem-solving capability that is composed of artificial neurons nodes that form a network through the combination of synapses.

Artificial neural network may be defined by connection pattern between neurons in different layers, a learning process that updates model parameter, and an activation function that generates output value.

An artificial neural network may include an input layer, an output layer, and optionally one or more hidden layers. Each layer may include one or more neurons, and the artificial neural network may include synapse connecting neurons. In an artificial neural network, each neuron may output the input signals input through the synapse, weight, and value of activation function for bias.

Model parameter refer to a parameter determined through learning and includes the weight of synapse connection and the bias of neurons. Hyperparameter refer to a parameter that must be set before learning in a machine learning algorithm and includes learning rate, number of repetition, mini-batch size, initialization function, etc.

The purpose of learning an artificial neural network may be seen as determining model parameter that minimize the loss function. The loss function may be used as an indicator to determine optimal model parameter during the learning process of an artificial neural network.

Machine learning may be classified into supervised learning, unsupervised learning, and reinforcement learning depending on the learning method.

Supervised learning refers to a method of training an artificial neural network with a label for the learning data given, a label may mean the correct answer (or result value) that the artificial neural network must infer when learning data is input to the artificial neural network.

Unsupervised learning may refer to a method of training an artificial neural network in a state where no label for training data is given.

Reinforcement learning may refer to a learning method in which an agent defined within an environment learns to select an action or action sequence that maximizes the cumulative reward in each state.

Among artificial neural networks, machine learning implemented with a deep neural network DNN that includes a plurality of hidden layers is also called deep learning, and deep learning is a part of machine learning.

Hereinafter, machine learning is used to include deep learning.

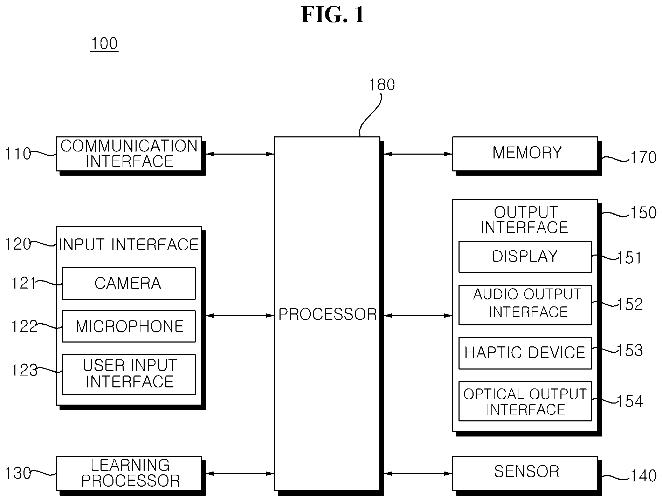

FIG. 1 is a block diagram for illustrating elements of an artificial intelligence device according to an embodiment of the present disclosure.

The artificial intelligence device 100 may be implemented as a fixed or movable device such as a TV, a projector, a mobile phone, a smartphone, a desktop computer, a laptop, a digital broadcasting terminal, a PDA (personal digital assistant), a PMP (portable multimedia player), a navigation, a tablet PC, a wearable device, and a set-top box (STB), a DMB receiver, a radio, a washing machine, a refrigerator, a desktop computer, a digital signage, a robot, a vehicle, etc.

Referring to FIG. 1, the artificial intelligence device 100 may include a communication interface 110, an input interface 120, a learning processor 130, a sensor 140, an output interface 150, a memory 170, and a processor 180.

The communication interface 110 may transmit and receive data with external device such as other artificial intelligence device or the AI server 200 using wired or wireless communication technology. For example, the communication interface 110 may transmit and receive sensor information, user input, learning model, and control signal with external device.

Communication technologies used by the communication interface 110 include Global System for Mobile communication GSM, Code Division Multi Access CDMA, Long Term Evolution LTE, 5G, Wireless LAN WLAN, and Wireless-Fidelity (Wi-Fi), Bluetooth, RFID (Radio Frequency Identification), Infrared Data Association IrDA, ZigBee, NFC (Near Field Communication), etc.

The input interface 120 may acquire various types of data.

The input interface 120 may include a camera 121 for capturing image, a microphone 122 for receiving audio signals, and a user input interface 123 for receiving information from a user.

The camera 121 or the microphone 122 is treated as a sensor, and the signal obtained from the camera 121 or the microphone 122 may be called sensing data or sensor information.

The input interface 120 may obtain training data for model learning and input data to be used when obtaining an output using the learning model. The input interface 120 may acquire unprocessed input data, and in this case, the processor 180 or the learning processor 130 may extract input feature by preprocessing the input data.

The camera 121 processes image frame such as still image or moving image obtained by an image sensor in video call mode or photographing mode. Processed image frame may be displayed on display 151 or stored in memory 170.

The microphone 122 processes external acoustic signal into electrical voice data. The processed voice data may be utilized in various ways depending on the function (or application being executed) being performed by the artificial intelligence device 100. Meanwhile, various noise removal algorithms may be applied to the microphone 122 to remove noise generated in the process of receiving an external acoustic signal.

The user input interface 123 is for receiving information from the user, when information is input through the user input interface 123, the processor 180 may control the operation of the artificial intelligence device 100 to correspond to the input information.

The user input interface 123 is a mechanical input means (or mechanical key, for example, a button, dome switch, jog wheel, or jog switch located on the front/rear or side of the artificial intelligence device 100). etc.) and a touch input means.

As an example, the touch input may consist of a virtual key, soft key, or visual key displayed on the touch screen through software processing, or a touch key placed in a part other than the touch screen.

The learning processor 130 may train a model composed of an artificial neural network using training data. The learned artificial neural network may be referred to as a learning model. A learning model may be used to infer a result value for new input data other than learning data, and the inferred value may be used as the basis for a decision to perform an operation.

The learning processor 130 may perform AI processing together with the learning processor 240 of the AI server 200.

The learning processor 130 may include memory integrated or implemented in artificial intelligence device 100. The learning processor 130 may be implemented using the memory 170, an external memory directly coupled to the artificial intelligence device 100, or a memory maintained in an external device.

The sensor 140 may obtain at least one of internal information of the artificial intelligence device 100, information on the surrounding environment of the artificial intelligence device 100, or user information using various sensors.

The sensor 140 may include at least one of a proximity sensor, an illumination sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar sensor, or a radar sensor.

The output interface 150 may generate output related to vision, hearing, or tactile sensation.

The output interface 150 may include a display 151 that outputs an image, an audio output interface 152 that outputs audio, a haptic device 153 that outputs tactile information, and an optical output interface 154 that outputs light.

The display 151 displays information processed by the artificial intelligence device 100. For example, the display 151 may display execution screen information of an application running on the artificial intelligence device 100, or user interface UI and graphic user interface GUI information according to the execution screen information.

The display 151 may be implemented as a touch screen by forming a mutual layer structure or being integrated with the touch sensor. The touch screen functions as a user input interface 123 that provides an input interface between the artificial intelligence device 100 and the user, and may simultaneously provide an output interface between the artificial intelligence device 100 and the user.

The audio output interface 152 may output audio data received from the communication interface 110 or stored in the memory 170 in call signal reception, call mode or recording mode, voice recognition mode, broadcast reception mode, etc.

The audio output interface 152 may include at least one of a receiver, a speaker, or a buzzer.

The haptic device 153 generates various tactile effects that the user may feel. A representative example of a tactile effect generated by the haptic device 153 may be vibration.

The light output interface 154 uses light from the light source of the artificial intelligence device 100 to output a signal to notify that an event has occurred. Examples of events that occur in the artificial intelligence device 100 may include receiving a message, receiving a call signal, a missed call, an alarm, a schedule notification, receiving an email, receiving information through an application, etc.

The memory 170 may store data supporting various functions of the artificial intelligence device 100. For example, the memory 170 may store input data obtained from the input interface 120, learning data, learning model, learning history, etc.

The processor 180 may determine at least one executable operation of the artificial intelligence device 100 based on information determined or generated using a data analysis algorithm or a machine learning algorithm.

The processor 180 may control the elements of the artificial intelligence device 100 to perform the determined operation.

To this end, the processor 180 may request, search, receive, or utilize data from the learning processor 130 or the memory 170, and may control elements of the artificial intelligence device 100 to be performed an operation that is predicted or an operation that is determined to be desirable among the at least one executable operation.

If linkage with an external device is necessary to perform a determined operation, the processor 180 may generate a control signal to control the external device and transmit the generated control signal to the external device.

The processor 180 may obtain intent information for user input and determine the user's request based on the obtained intent information.

The processor 180 may obtain intent information corresponding to the user input using at least one of a STT (Speech To Text) engine for converting voice input into a character string or a Natural Language Processing NLP engine for acquiring intent information of natural language.

At least one of the STT engine and the NLP engine may be composed of at least a portion of an artificial neural network learned according to a machine learning algorithm. And, at least one of the STT engine or the NLP engine may be learned by the learning processor 130, learned by the learning processor 240 of the AI server 200, or learned by distributed processing thereof.

The processor 180 may collect history information including the user's feedback on the operation of the artificial intelligence device 100, to store it in the memory 170 or the learning processor 130 or the AI server 200, etc. and transmit it to external device. The collected historical information may be used to update the learning model.

The processor 180 may control at least some of the elements of the artificial intelligence device 100 to run an application program stored in the memory 170.

The processor 180 may operate two or more of the elements included in the artificial intelligence device 100 in combination with each other in order to run the application program.

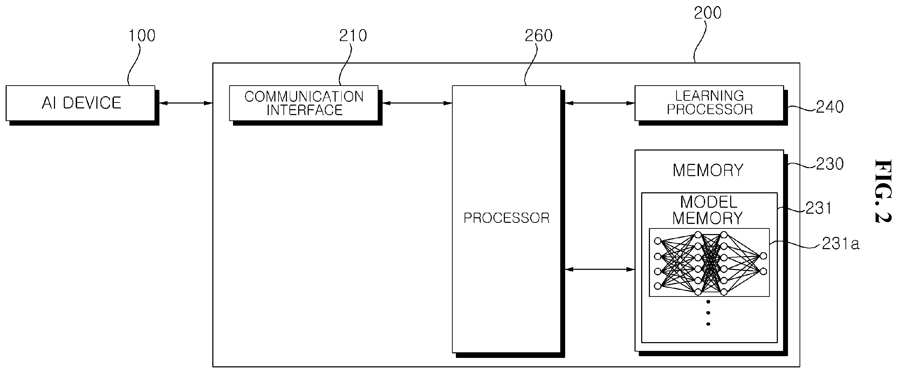

FIG. 2 is a diagram for illustrating the configuration of an artificial intelligence server according to an embodiment of the present disclosure.

Referring to FIG. 2, the AI server 200 may refer to a device that trains an artificial neural network using a machine learning algorithm or uses a learned artificial neural network.

The AI server 200 may be composed of a plurality of servers to perform distributed processing, and may be defined as a 5G network. The AI server 200 may be included as a part of the artificial intelligence device 100 and may perform at least part of the AI processing.

The AI server 200 may include a communication interface 210, a memory 230, a learning processor 240, and a processor 260.

The communication interface 210 may transmit and receive data with an external device such as the artificial intelligence device 100.

The memory 230 may include a model memory 231. The model memory 231 may store a model (or artificial neural network, 231a) that is being trained or has been learned through the learning processor 240.

The learning processor 240 may train the artificial neural network 231a using training data. The learning model may be used while mounted on the AI server 200 of the artificial neural network, or may be mounted and used on an external device such as the artificial intelligence device 100.

The learning model may be implemented in hardware, software, or a combination of hardware and software. When part or all of the learning model is implemented as software, one or more instructions constituting the learning model may be stored in the memory 230.

The processor 260 may infer a result value for new input data using a learning model and generate a response or control command based on the inferred result value.

Hereinafter, the artificial intelligence device 100 may be any one of a TV, a mobile terminal such as a smartphone, a computer, or a kiosk.

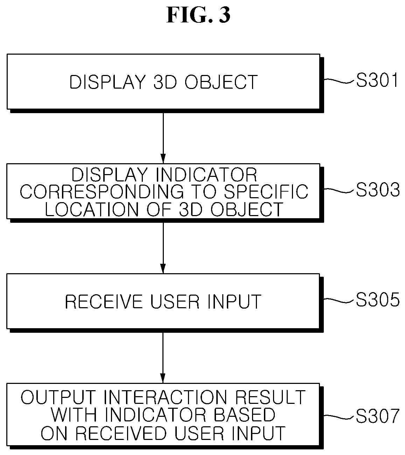

FIG. 3 is a flowchart illustrating a method for searching a virtual product using a three-dimensional object of an artificial intelligence device according to an embodiment of the present disclosure.

Referring to FIG. 3, the processor 180 of the artificial intelligence device 100 may display a 3D object on the display 151 S301.

In one embodiment, the 3D object may be any one of a 3D electronic device, a furniture, a person, or a plant. The electronic device may be an appliance such as a clothes washer, an air conditioner, a refrigerator, a vacuum cleaner, or a TV.

The processor 180 may display the 3D object on the display 151 upon receiving a request.

In one embodiment, the 3D object may be an object created using a lightweight model that creates the 3D object from drawing data. The drawing data may be a CAD file. In particular, the drawing data may include a plurality of CAD files corresponding to each of a plurality of components constituting the electronic device.

The lightweight model may be a model stored in the memory 170 of the artificial intelligence device 100 or the memory 230 of the server 200.

When the lightweight model is stored in the memory 230 of the server 200, the processor 180 may receive the 3D object generated by the lightweight model stored in the server 200 and store the received 3D object in the memory 170.

The 3D object may be an object that accurately embodies the moving parts of an actual electronic device, providing an environment in which the user may virtually experience the operation of an actual product.

Specifically, The 3D object may be modeled using the lightweight model, distinguishing between fixed and moving parts(or components). Here, "a moving part" refer to any part in an actual electronic device whose position or movement is affected by a power, a user manipulation, or a driving part. For example, in a washing machine, this could include a drum, a detergent dispenser, and a door.

The 3D object may be modeled to include a motion sequence for grouped object components corresponding to moving parts among a plurality of parts.

In the present disclosure, the motions of these moving parts may be implemented as a key-frame animation sequence. The key-frame animation sequence may be designed to precisely mimic a physical motion of the actual product, such as opening and closing, rotation, and movement.

The processor 180 may detect a user input and play a corresponding keyframe animation sequence. For example, if the processor 180 detects a motion input of a user opening the door of a virtual washing machine, the processor 180 may play a predefined door open keyframe animation sequence to virtually display a door opening in the same manner as in reality.

In addition, the present disclosure may provide a technical feature that enable light operation in a web environment through efficient data processing of the 3D object.

High-resolution 3D models are typically large in size, which may take a significant amount of time to load and render in a web environment. To address this issue, the present disclosure proposes a lightweighting process for the 3D object.

Lightweighting may involve a variety of techniques, such as reducing unnecessary polygon counts, optimizing textures, and applying data compression techniques. This allows the 3D object to load and render smoothly on a low-spec device, even within a web application. The lightweighting is discussed further below.

The 3D object that has undergone this lightweight process reduce a server load, shorten a user waiting time, and enable stable service provision even in unstable network environments.

The processor 180 may display an indicator corresponding to a specific location of the 3D object on the display 151 S303.

In one embodiment, the indicator may be a user interface element for providing information corresponding to the specific location of the 3D object.

The processor 180 may display the indicator corresponding to the specific location of the 3D object on the specific location of the 3D object. The specific location may correspond to any one of a plurality of object components constituting the 3D object.

The processor 180 may display a plurality of indicators corresponding to each of a plurality of locations of the 3D object on the 3D object.

In one embodiment, the indicator may have any one of a circle, a square, or a triangle shape, but this is merely an example and may be expressed in various shapes.

Each indicator may highlight a component that makes up the 3D object or a function of a device that corresponds to the 3D object.

In one embodiment, the indicator may have a different shape depending on a type of action being performed when interacting with a user input. For example, if the interaction is playing a video, the indicator may have a circular shape, and if the interaction is executing an action sequence, the indicator may have a triangular shape.

The processor 180 may receive a user input S305 and output an interaction result with the displayed indicator based on the received user input through the output interface 150 S307.

In one embodiment, the user input may be input received via the input interface 120.

The user input may be any one of a gesture input recognized from an image captured by the camera 121, a voice input received through the microphone 122, a mouse input received through a mouse connected to the user input interface 123, or a touch input recognized from the display 151 implemented as a touch screen.

The user input may be input for interacting with the indicator or the 3D object. Specifically, the user input may be input for controlling the 3D object by manipulating the indicator. The user input may be any one of input for activating the indicator, input for selecting the indicator, or input for controlling an object component that constitutes the 3D object.

The user input may be an input that conveys the user's intent.

The interaction result may include one or more of any feedback provided to the user through the output interface 150 based on the received user input or a changed state of the 3D object.

Specifically, the interaction result may include at least one of switching a view point representing a view angle of the 3D object, playing an animation representing a movement sequence of object components constituting the 3D object, displaying a text, or displaying an image.

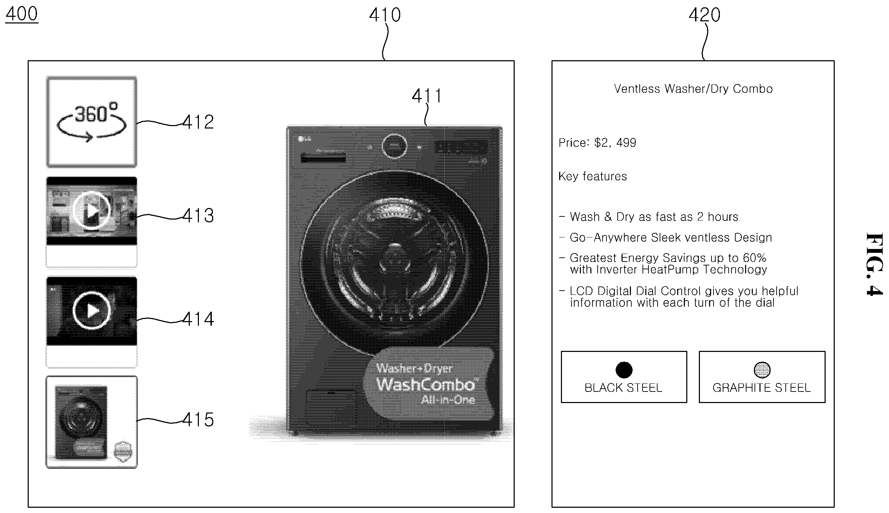

FIGS. 4 to 16 are drawings illustrating examples of controlling a 3D object based on user input according to various embodiments of the present disclosure.

Hereinafter, the user input may be either a gesture input recognized through the camera 121 or a mouse input received through a mouse connected through the user input interface 123, but need not be limited thereto.

Referring to FIG. 4, the processor 180 of the artificial intelligence device 100 may display a screen 400 for providing information of an electronic device on the display 151.

In one embodiment, the screen 400 may be any one of a website screen for selling the electronic device, a screen provided through a kiosk for promoting the electronic device, or an execution screen of an interactive application that provides an interaction service with 3D object.

The screen 400 may include a 3D object guide area 410 and a detailed information area 420.

The 3D object guide area 410 may include an electronic device image 411 representing the electronic device and first to fourth menus 412 to 415.

The first menu 412 may be a menu for interaction with a virtual 3D object corresponding to the electronic device.

The second menu 413 may be a menu for placing the virtual 3D object corresponding to the electronic device in a virtual showroom.

Each of the third menu 414 and the fourth menu 415 may be a menu for playing a video explaining the functions provided by the electronic device.

The detailed information area 420 may include detailed information about the electronic device. The detailed information about the electronic device may include a price of the electronic device, key features, and a color selection menu for changing the image of the electronic device.

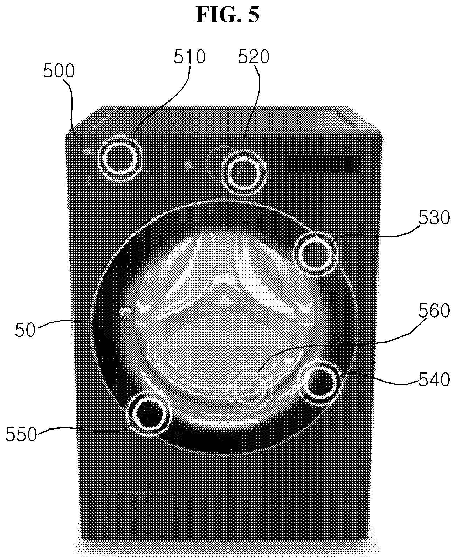

When the processor 180 receives the user input for selecting the first menu 412 of FIG. 4, it may display a 3D object 500 corresponding to the electronic device on the display 151, as shown in FIG. 5. It is assumed that the electronic device is a clothes treatment device, a type of home appliance that provides washing and drying functions.

The 3D object 500 may be an object generated by the aforementioned lightweight model. The artificial intelligence device 100 may store the 3D object 500 generated by the lightweight model in the memory 170.

The 3D object 500 may include a plurality of object components. Each of the plurality of object components may correspond to each of a plurality of parts constituting the electronic device.

Referring to FIG. 5, the processor 180 may display one or more indicators 510 to 560 on the 3D object 500. The viewpoint of FIG. 5 may be a reference viewpoint. The reference viewpoint may be a viewpoint that shows the front of the 3D object 500.

Each of the plurality of indicators 510 to 560 may be selectable (or clickable) based on the user input. Each of the plurality of indicators 510 to 560 may be an identifier capable of providing the interaction result based on the user input.

The plurality of indicators 510 to 560 may have different shapes depending on a type of the interaction result. For example, an indicator that provides an animation representing the motion sequence of an object component corresponding to a part may have a circular shape, and an indicator that provides a video explaining the function of an object component may have a triangular shape.

Each of the plurality of indicators 510 to 560 may be positioned at a location corresponding to a component of the electronic device. Each of the plurality of components constituting the electronic device may correspond to each of the plurality of object components constituting the 3D object.

Each of the plurality of indicators 510 to 560 may be displayed in a form that highlights the object component.

Each of the plurality of indicators 510 to 560 may have the shape of two concentric circles of different sizes, but this is only an example.

The processor 180 may further display a cursor 50 controlled in response to a mouse input. The processor 180 may control the 3D object 500 through the mouse input that controls the cursor 50. The processor 180 may rotate the 3D object 500 in a specific direction through the mouse input that controls the cursor 50. The processor 180 may select any one of a plurality of indicators 510 to 560 through the mouse input that controls the cursor 50.

The processor 180 may further display a gesture guide for interaction with the indicator on the display 151 in case the user input is a gesture input. The gesture guide may include a gesture image and a description of an action that occurs when the gesture image is taken.

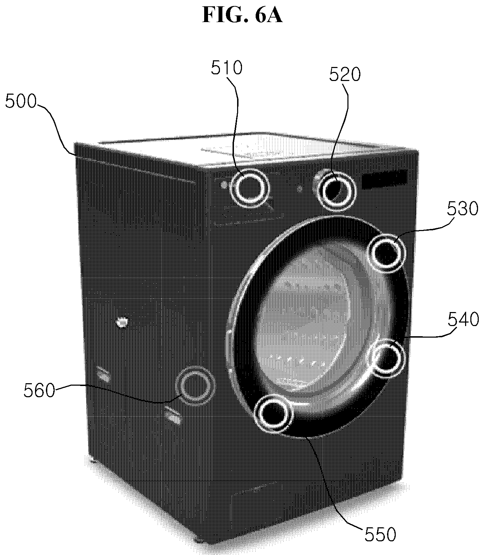

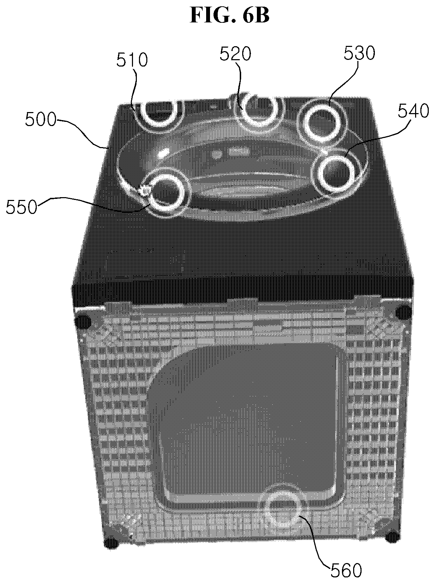

FIGS. 6A to 6E are drawings explaining the 3D object 500 output according to a change in view point.

FIGS. 6A to 6E each show the 3D object 500 displayed from first to fifth viewpoints corresponding to different angles.

The 3D object 500 may be rotated 360 degrees in any one of the x-axis direction, y-axis direction, or z-axis direction according to the mouse input. The processor 180 may display the 3D object 500 of the corresponding viewpoint by rotating the 3D object 500 in a specific direction according to the mouse input that controls the cursor 50.

The plurality of indicators 510 to 560 may be displayed so as to remain at positions corresponding to each of the plurality of object components even when the view point is switched.

The processor 180 may display an indicator corresponding to a visible object component and an indicator corresponding to an invisible object component in different states at a specific viewpoint. The visible object component may be a component that is positioned outside of the 3D object and is visually identifiable, and the invisible object component may be a component that is positioned inside the 3D object and is not visually identifiable.

The processor 180 may display the indicator corresponding to the visible object component in a first state, and may display the indicator corresponding to the invisible object component in a second state.

In one embodiment, the first state may be a state in which the indicator is opaque, and the second state may be a state in which the indicator is transparent.

In another embodiment, the first state may have a darker color of the indicator than the second state.

For example, referring to FIGS. 6A to 6C, in the first to third viewpoints, the first to fifth indicators 510 to 550 correspond to visible object components and thus may be displayed opaquely, and the sixth indicator 560 corresponds to the invisible object component and thus may be displayed transparently.

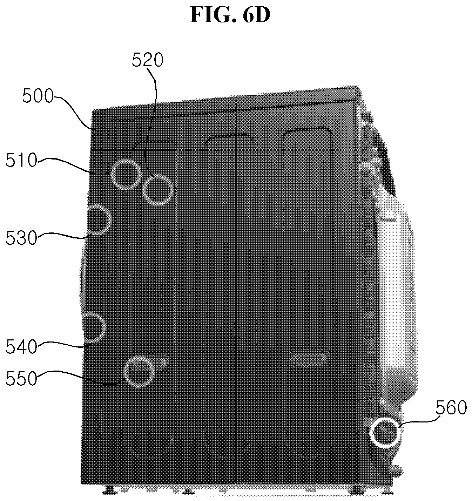

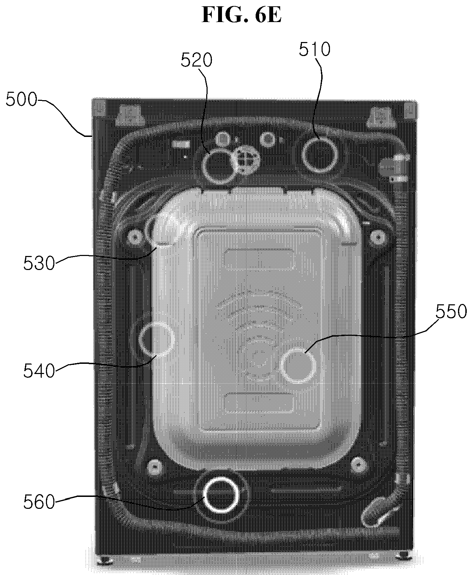

Conversely, referring to FIGS. 6D and 6E, in the fourth viewpoint and the fifth viewpoint, the first to fifth indicators 510 to 550 correspond to invisible object components and thus may be displayed transparently, and the sixth indicator 560 corresponds to the visible object component and thus may be displayed opaquely.

In this way, according to an embodiment of the present disclosure, since the indicator corresponding to the visible object component and the indicator corresponding to the invisible object component are displayed differently, the user may intuitively distinguish whether each object component is visible and more quickly select the object component of interest.

In another embodiment, the processor 180 may not display the indicator corresponding to the invisible object component.

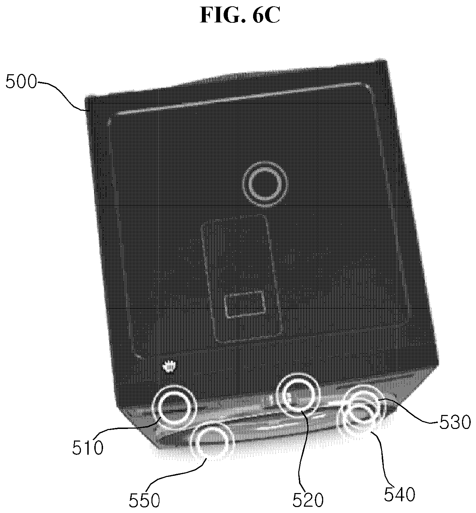

In another embodiment, when the processor 180 receives the user input for an indicator in the second state, the processor 180 may change the viewpoint of the 3D object 500 to a position where the state of the indicator may become the first state. For example, as shown in FIG. 6C, when the processor 180 receives the user input for selecting the sixth indicator 560 in the second state from the third viewpoint, the processor 180 may control the movement of the 3D object 500 to change the viewpoint from the third viewpoint to the fifth viewpoint so that the sixth indicator 560 in the second state becomes the first state, as shown in FIG. 6E.

In another embodiment, the processor 180 may change the viewpoint so that the two indicators are separated when the distance between the two indicators at a specific viewpoint is less than a reference distance. For example, as shown in FIG. 6C, when the distance between the third indicator 530 and the fourth indicator 540 at the third viewpoint is within the reference distance, the viewpoint may be changed so that the distance between the two is greater than or equal to the reference distance.

Below, when the cursor 50 is positioned on the indicator through the mouse input or the indicator is hovered through the gesture input, the indicator may be displayed separately from other indicators.

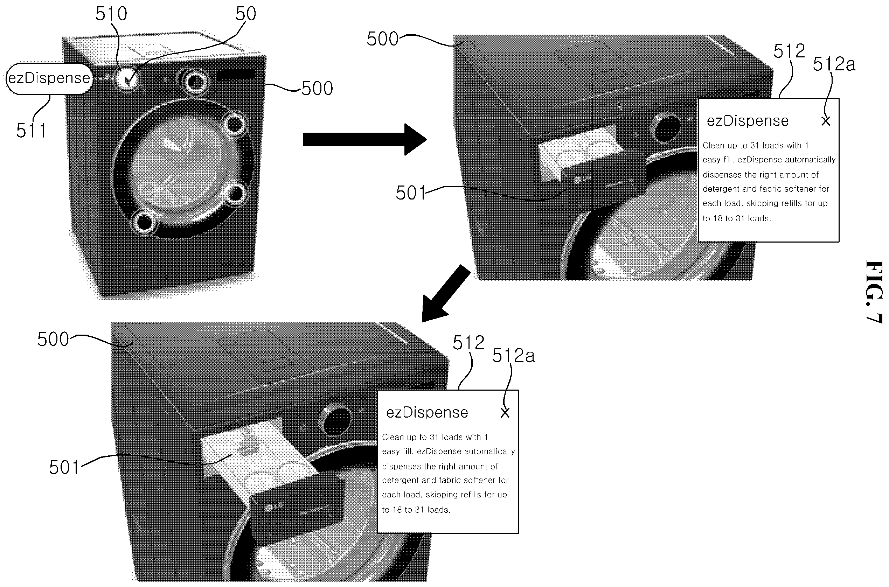

Referring to FIG. 7, the processor 180 may display a first product guide item 511 corresponding to the first indicator 510 on the display 151 when the cursor 50 is positioned on the first indicator 510 or when a gesture input is hovered over the first indicator 510. The gesture input may be an input corresponding to a motion of extending only an index finger.

The first product guide item 511 may be displayed adjacent to the first indicator 510. The first product guide item 511 may be an item indicating a name of a function corresponding to the object component where the first indicator 510 is located. For example, the first product guide item 511 may be an item indicating an exDispense function, which automatically measures and dispenses a detergent and a fabric softener required for each wash.

When the first indicator 510 is selected through the cursor 50 or a hovering time on the first indicator 510 is maintained for 1 second or more, the processor 180 may display a first product guide 512 explaining the exDispense function while playing a dispenser withdrawal animation in which a dispenser object component 501 corresponding to a dispenser of the clothes treatment device is withdrawn. At the same time, the processor 180 may switch the view point so that the dispenser withdrawal animation is clearly visible and may enlarge the dispenser object component 501 of the 3D object 500.

The processor 180 may stop displaying the plurality of indicators 510 to 560 while playing the dispenser withdrawal animation in which the dispenser object component 501 is withdrawn.

The dispenser withdrawal animation may be played during a viewpoint transition or after the viewpoint transition is complete.

Meanwhile, the interaction result for the first indicator 510 may include one or more of displaying the first product guide item 511, displaying the first product guide 512, or playing the dispenser withdrawal animation in which the dispenser object component 501 is withdrawn.

The processor 180 may display the 3D object 500 of the reference viewpoint of FIG. 5 or the viewpoint of FIG. 6A according to a command to select a close button 512a included in the first product guide 512.

In this way, according to an embodiment of the present disclosure, the component of the 3D object may be controlled through the user input to the indicator, thereby providing an interface experience similar to actual device operation.

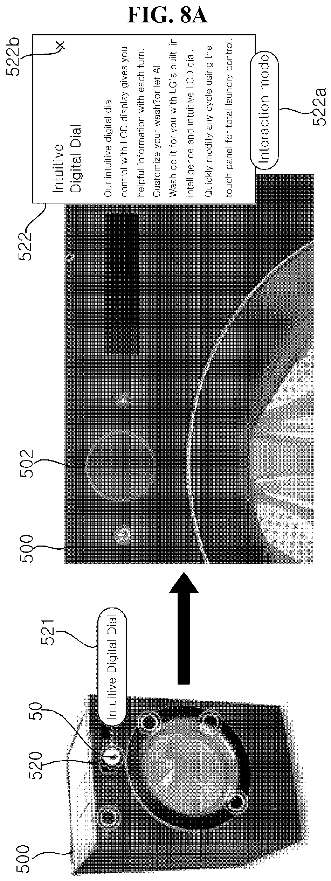

Referring to FIG. 8A, the processor 180 may display a second product guide item 521 corresponding to the second indicator 520 on the display 151 when the cursor 50 is positioned on the second indicator 520 or when a gesture input is hovered over the second indicator 520.

The second product guide item 521 may be displayed adjacent to the second indicator 520. The second product guide item 521 may be an item indicating a name of a function corresponding to the object component where the second indicator 520 is located. For example, the second product guide item 521 may be an item indicating an Intuitive Digital Dial function, which allows intuitive control of the electronic device through a dial operation.

The processor 180 may display a second product guide 522 explaining the Intuitive Digital Dial function while displaying a dial object component 502 corresponding to the dial of the clothes treatment device when the second indicator 520 is selected through the cursor 50 or when a gesture input is hovered over the second indicator 520 for more than one second.

At the same time, the processor 180 may change the view point so that the dial object component 502 is clearly visible and may enlarge the area of the 3D object 500 that includes the dial object component 502.

The second product guide 522 may be provided with an interaction mode button 522a for operating in an interaction mode. In one embodiment, the processor 180 may provide an interaction mode in which the dial object component 502 may be operated using user input when the interaction mode button 522a is selected. In another embodiment, the processor 180 may control the dial object component 502 through the user input even without selecting the interaction mode button 522a.

Meanwhile, the interaction result for the second indicator 520 may include one or more of displaying a second product guide item 521, displaying a second product guide 522, displaying the dial object component 502, or providing an interaction mode. The dial object component 502 may be a sub-indicator of the second indicator 520.

The processor 180 may display the 3D object 500 of the reference viewpoint of FIG. 5 or the viewpoint of FIG. 6A according to a command to select a close button 522b included in the second product guide 522.

Meanwhile, the interaction mode may be a mode that reproduces an experience of operating an actual product in a virtual environment by allowing the user to operate a virtual button or dial using hand gesture input.

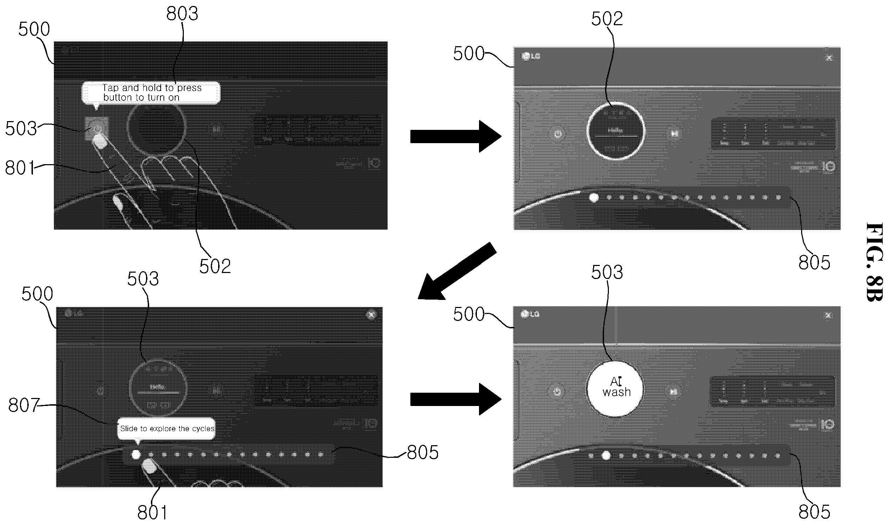

The processor 180 may display the interaction results as shown in FIG. 8B when the interaction mode item 522a is selected.

Referring to FIG. 8B, under the interaction mode, the dial object component 502 and the power button object component 503 may be in a selectable state.

Additionally, a power operation guide 803 may be further displayed on one side of the power button object component 503.

That is, each of the dial object component 502 and the power button object component 503 may interact with the user's gesture input.

The processor 180 may switch the power of the 3D object 500 to an on state in a virtual environment when a gesture input 801 hovers over the power button object component 502 for a certain period of time. As the power of the 3D object 500 is turned on, the processor 180 may display operation mode information for setting the operation mode of the 3D object 500 on the dial object component 502.

The processor 180 may further display a guide bar 805 for manipulation of the dial object component 502 as the 3D object 500 is powered on.

The guide bar 805 may guide a selection status of a washing mode or a drying mode according to the operation of the dial component 502.

Inside the guide bar 805, a circular pointer indicating a position of the gesture input 801 and a dial operation guide 807 indicating the method of manipulating the dial object component 502 may be further displayed on one side of the guide bar 805.

The processor 180 recognizes the gesture input 801 for moving a circular pointer within the guide bar 805 one space to the right, and operates the dial object component 502 according to the recognized gesture input 801, and may display an operation mode (e.g., AI wash mode) according to an operation result on the dial object component 502.

In another embodiment, the processor 180 may operate the dial object component 502 upon detecting a motion input that rotates the dial object component 502, and display the operation mode according to the operation result on the dial object component 502.

In another embodiment, the processor 180 may display one operation mode on the dial object component 502 upon detecting a motion input for zooming out the dial object component 502. The processor 180 may display a plurality of detailed operation buttons that may set detailed operations of the operation mode displayed on the dial object component 502 upon detecting the motion input for zooming in the dial object component 502.

In this way, according to an embodiment of the present disclosure, components of the 3D object may be controlled through a user input to an indicator, thereby providing an interface experience similar to actual device operation.

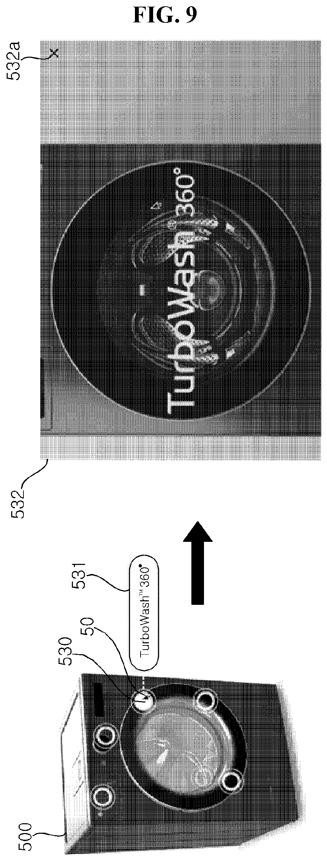

Referring to FIG. 9, the processor 180 may display a third product guide item 531 corresponding to the third indicator 530 on the display 151 when the cursor 50 is positioned on the third indicator 530 or when a gesture input is hovered on the third indicator 530.

The third product guide item 531 may be displayed adjacent to the third indicator 530. The third product guide item 531 may be an item indicating a name of a function corresponding to the object component where the third indicator 530 is located. For example, the third product guide item 531 may be an item indicating a Turbo Wash function of a washing tub object component.

The processor 180 may play a video 532 explaining the Turbo Wash function when the third indicator 530 is selected through user input.

The result of the interaction with the third indicator 530 may be a playback of the video 532 explaining the Turbo Wash function.

The processor 180 may display the 3D object 500 of the reference view point of FIG. 5 or the view point of FIG. 6A according to a command to select a close button 532a included in the video 532.

In this way, according to an embodiment of the present disclosure, a video explaining the function provided by a specific component is provided through the user input to an indicator, so that the user may intuitively understand the function and method of use of the component.

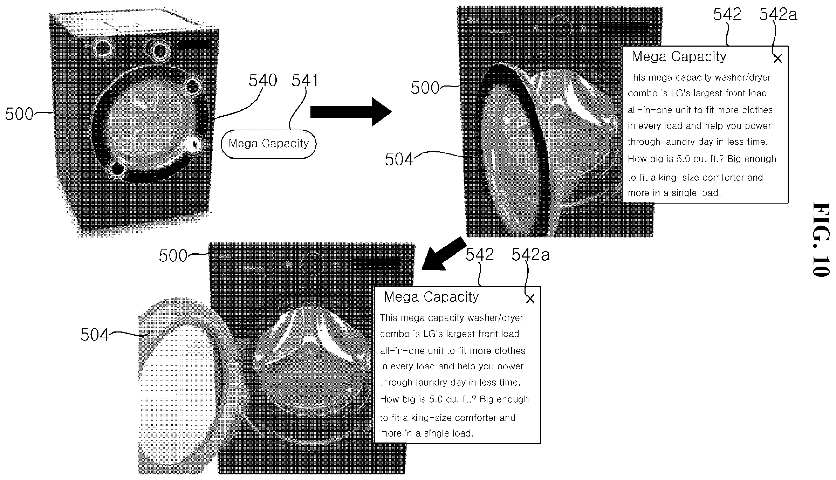

Referring to FIG. 10, the processor 180 may display a fourth product guide item 541 corresponding to the fourth indicator 540 on the display 151 when the cursor 50 is positioned on the fourth indicator 540 or when the gesture input is hovered on the fourth indicator 540.

The fourth product guide item 541 may be displayed adjacent to the fourth indicator 540. The fourth product guide item 541 may be an item indicating the name of function corresponding to the object component where the fourth indicator 540 is located. For example, the fourth product guide item 541 may be an item indicating a Mega Capacity function indicating the washing or drying capacity that may be processed at one time.

When the fourth indicator 540 is selected via the cursor 50 or the gesture input is hovered over the fourth indicator 540 for more than one second, the processor 180 may display a fourth product guide 542 explaining the Mega Capacity function while playing a door open animation in which a door object component 504 corresponding to a door of the clothes treatment device opens. At the same time, the processor 180 may switch the viewpoint so that the door open animation is clearly visible and may enlarge the door object component 504 of the 3D object 500.

Meanwhile, the interaction result for the fourth indicator 540 may include one or more of displaying the fourth product guide item 541, displaying the fourth product guide 542, or playing the door open animation in which the door object component 504 opens.

The processor 180 may display the fourth indicator 540 before the door object component 504 opens. Thereafter, the processor 180 may move the position of the fourth indicator 540 to the door object component 504 in the open state after the door object component 504 opens.

As another example, the processor 180 may fix the position of the fourth indicator 540 after the door object component 504 is opened, but may also change a property such as a color or a transparency of the fourth indicator 540.

The processor 180 may display the 3D object 500 of the reference viewpoint of FIG. 5 or the viewpoint of FIG. 6A according to a command to select a close button 542a included in the fourth product guide 542.

In this way, according to an embodiment of the present disclosure, since an animation representing the operation of the component of the 3D object is provided through the user input to the indicator, the user may visually understand a structure and an operating principle of the component, thereby increasing the user's understanding of the product and improving an usability.

In another embodiment, when the motion input (a type of gesture input) for opening the door object component 504 is received after the gesture input is hovered over the fourth indicator 540, the processor 180 may display the fourth product guide 542 explaining the Mega Capacity function while playing the door open animation in which the door object component 504 opens.

The processor 180 may further display a motion guide describing the motion input for playing the door open animation when the gesture input is hovered over the fourth indicator 540. The motion guide may include a motion image representing the user's motion and a text describing an action occurring according to the motion image. The user may perform the motion input through the motion guide.

When the same motion input is detected a plurality of times, the processor 180 may repeatedly play the door open animation or adjust a playback speed of the door open animation in which the door object component 504 opens. When the same motion input is detected a plurality of times, the processor 180 may reduce the playback speed of the door open animation in which the door object component 504 opens.

In this way, according to embodiments of the present disclosure, a rich user experience may be provided that allows the user to more intuitively control the virtual object and explore detailed information about the product.

In another embodiment, when the processor 180 plays the door opening animation based on detection of the user input, the processor 180 may transmit a control signal to the clothes treatment device via the communication interface 110 to open the door of the actual clothes treatment device corresponding to the 3D object 500. The control signal may be a signal that activates a drive mechanism built into the actual clothes treatment device to physically open the door.

In this way, according to an embodiment of the present disclosure, the operation performed by the user in the virtual environment may have the effect of extending to the physical movement of the actual device, thereby providing the user with a more immersive and realistic interaction experience.

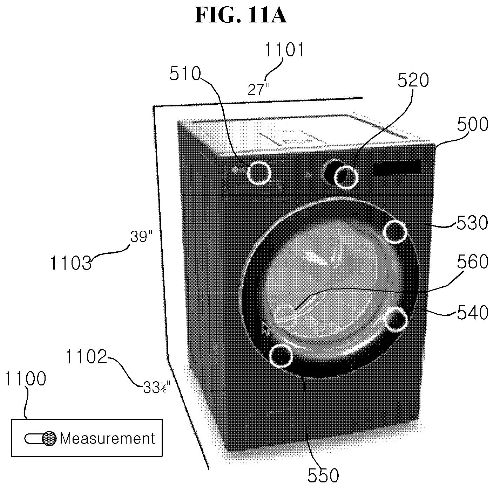

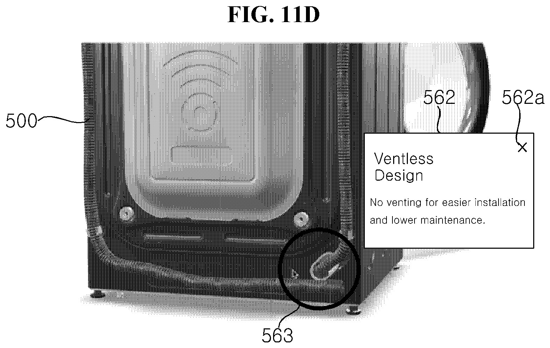

Referring to FIG. 11A, the processor 180 may display the 3D object 500, the plurality of indicators 510 to 560, and a measurement menu 1100 corresponding to the first viewpoint.

The measurement menu 1100 may be a menu for displaying a horizontal length 1101, a vertical length 1102, and a height 1103 of the 3D object 500. The processor 180 may display the horizontal length 1101, the vertical length 1102, and the height 1103 of the 3D object 500 upon receiving a user input for activating the measurement menu 1100. If the measurement menu 1100 is deactivated, the horizontal length 1101, the vertical length 1102, and the height 1103 of the 3D object 500 may not be displayed.

The horizontal length 1101, the vertical length 1102, and the height 1103 of the 3D object 500 may vary depending on a model of the electronic device corresponding to the 3D object 500.

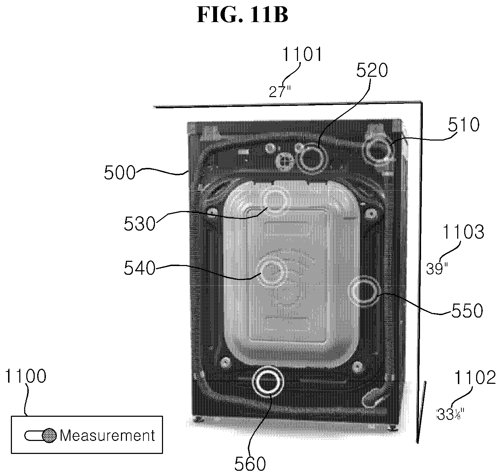

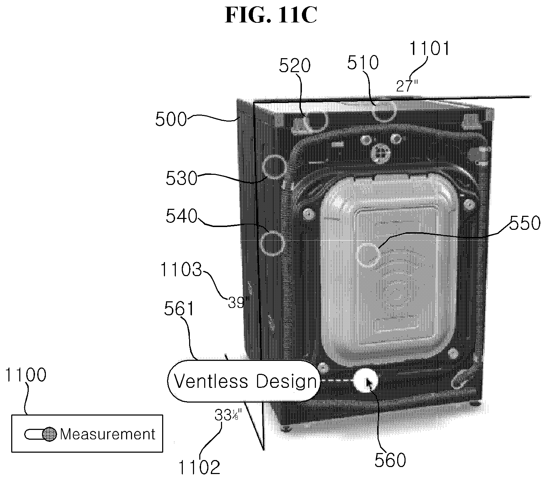

The processor 180 may display the 3D object 500 corresponding to the sixth viewpoint, as in FIG. 11B, or the 3D object 500 corresponding to the seventh viewpoint, as in FIG. 11C, according to a user input for switching the viewpoint.

Referring to FIG. 11C, when the cursor 50 is positioned on the sixth indicator 560, the processor 180 may display a sixth product guide item 561 corresponding to the sixth indicator 560 on the display 151. The sixth product guide item 561 may be displayed adjacent to the sixth indicator 560. The sixth product guide item 561 may be an item indicating a design corresponding to object component on which the sixth indicator 560 is positioned. For example, the sixth product guide item 561 may be an item indicating a design that does not use an exhaust duct.

When the sixth indicator 560 is selected via the cursor 50, the processor 180 may display a sixth product guide 562 describing the exhaustless design. At the same time, the processor 180 may switch the viewpoint to clearly show an exhaustless design and display the exhaustless design structure. To this end, the processor 180 may enlarge a drain hose object component 563 of the 3D object 500 so that the exhaustless design may be confirmed.

Meanwhile, the interaction result for the sixth indicator 560 may include one or more of the indication of the sixth product guide item 561, the indication of the sixth product guide 562, or the indication of the exhaustless design.

Additionally, the processor 180 may output an interaction result for the sixth indicator 560 through a user's gesture input instead of a mouse input for controlling the cursor 50.

The processor 180 may display the 3D object 500 of the reference viewpoint of FIG. 5 or the viewpoint of FIG. 6A according to a command to select a close button 563a included in the sixth product guide 562.

In this way, according to an embodiment of the present disclosure, the internal structure of the 3D object may be provided through the user input to the indicator, so that the user may visually understand the component, an interconnection relationship, and an operating principle of the actual electronic device.

According to another embodiment of the present disclosure, the processor 180 may provide a scenario for virtually disassembling a home appliance corresponding to the 3D object 500.

The processor 180 may detect a user input and activate a disassembly mode of the 3D object 500. When the disassembly mode is activated, the processor 180 may play a disassembly animation that separates object components constituting the 3D object 500 and displays them in a space. At this time, each object component may be displayed spaced apart by a certain distance from its original assembled state.

The processor 180 may select, rotate, or enlarge or reduce a size of individual object component based on a specific user gesture input. For example, if the user makes a gesture of pointing a finger at a specific object component, the object component may be highlighted and selected.

Afterwards, when the user makes a gesture of rotating his hand, the selected object component rotates 360 degrees, allowing the user to observe all sides of the object component in detail.

Such the virtual disassembly scenario offers an technological advantage of allowing users to intuitively understand the internal structure of a product and the functions of each component through direct manipulation. This may be useful for product training, learning maintenance method, or checking detailed product specifications before purchase.

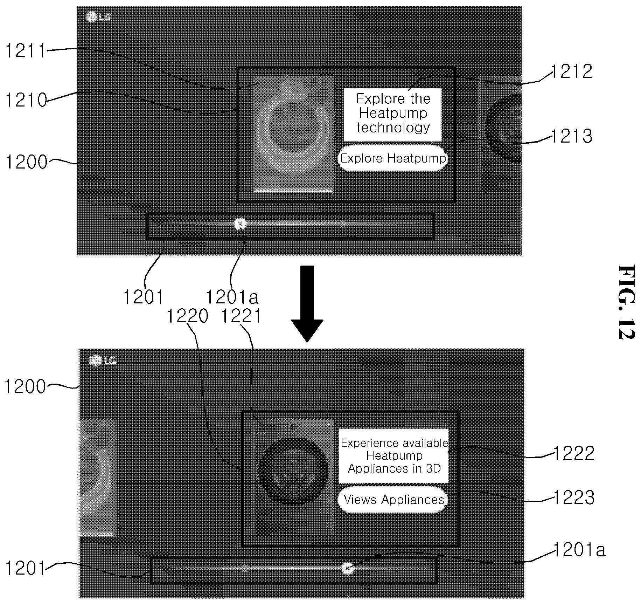

Referring to FIG. 12, the processor 180 illustrates a welcome screen 1200 representing a start screen of a kiosk or an initial launch screen of an interactive application.

The welcome screen 1200 may include a heat pump function item 1210 for providing information related to a heat pump function of the clothes treatment device or a product list view item 1220 for providing a list of home appliances with a heat pump function.

The heat pump function item 1210 may include a function image 1211 describing the heat pump function, a heat pump function introduction 1212, and a function navigation button 1213.

The product list view item 1220 may include a product image 1221 of a product with the heat pump function applied, a product introduction 1222 indicating that the 3D object of the product is provided, and a view button 1223.

The welcome screen 1200 may further include a slide bar 1201 including a slide handle 1201a. The processor 180 may display either the heat pump function item 1210 or the product list view item 1220 on the welcome screen 1200 according to a user input manipulating the slide handle 1201a.

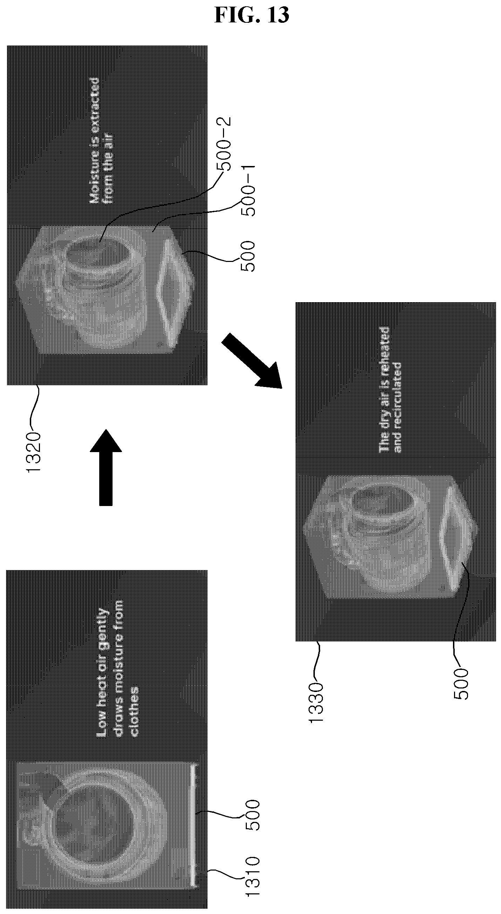

In one embodiment, the processor 180 may sequentially play animations 1310, 1320, 1330 describing the heat pump function, as illustrated in FIG. 13, in response to a user input selecting a function navigation button 1213 of the heat pump function item 1210.

In another embodiment, the processor 180 may sequentially play animations 1310, 1320, 1330 describing the heat pump function in response to a user input selecting the fifth indicator 550 corresponding to a heat pump object component associated with the heat pump function of the 3D object 500.

The processor 180 may control the transparency of object component of the 3D object 500 according to a user input selecting a function navigation button 1213 of the heat pump function item 1210 or a user input selecting the fifth indicator 550.

For example, the processor 180 may display a first component area 500-1 including object components of the 3D object 500 that is not related to the heat pump function transparently, and display a second component area 500-2 including object components of the 3D object 500 that is related to the heat pump function opaquely.

That is, the processor 180 may transparently implement a first component area 500-1 that is not related to the heat pump function to show the internal appearance of the actual operating motion of the heat pump function.

Each of the animations 1310, 1320, 1330 may represent the operating state of object components corresponding to parts used to perform the heat pump function.

Meanwhile, when playing the animations 1310, 1320, 1330, the processor 180 may play a sound corresponding to the motion represented by each animation through the audio output interface 152.

Specifically, the processor 180 may output a soft blowing sound when playing a first animation 1310 in which low-temperature air gently removes moisture from clothing. The processor 180 may output a water droplet condensation sound or a water flowing sound when playing a second animation 1320 in which moisture is condensed and removed from the air. The processor 180 may output a strong blowing sound or a heater operation sound when playing a third animation 1330 in which dried air is reheated and recirculated.

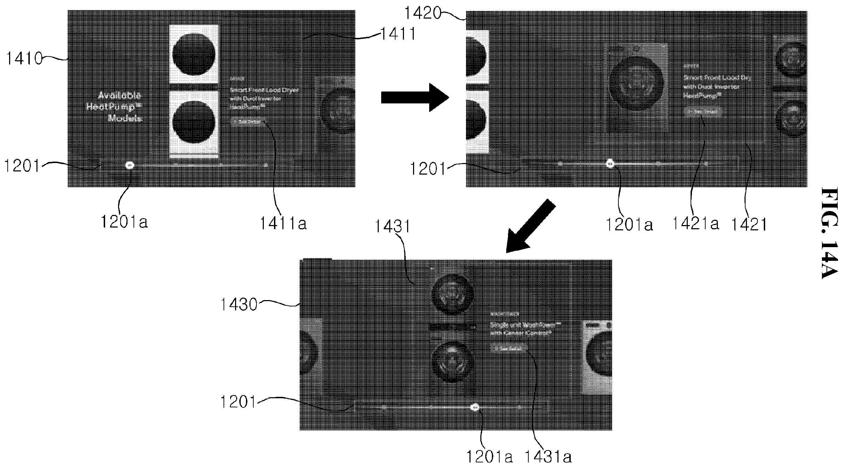

Meanwhile, the processor 180 may display one of the product introduction screens 1410, 1420, 1430 introducing a plurality of products on the display 151, as shown in FIG. 14A, according to a user input selecting the view button 1223 of FIG. 12.

Each of the product introduction screens 1410, 1420, 1430 may be a screen including introduction information for a different product. The first product introduction screen 1410 may include a first dryer introduction information 1411 including a text introducing a first type of dryer and a detail button 1411a for providing detailed information. The second product introduction screen 1420 may include a second dryer introduction information 1421 including a text introducing a second type of dryer and a detail button 1412a for providing detailed information. The third product introduction screen 1430 may include a clothes treatment device introduction information 1431 including a text introducing a clothes treatment device having a washing function and a drying function and a detail button 1431a for providing detailed information.

Each of the product introduction screens 1410, 1420, 1430 may further include a slide bar 1201 including a slide handle 1201a.

The processor 180 may display one of the product introduction screens 1410, 1420, 1430 according to a user input that operates the slide handle 1201a.

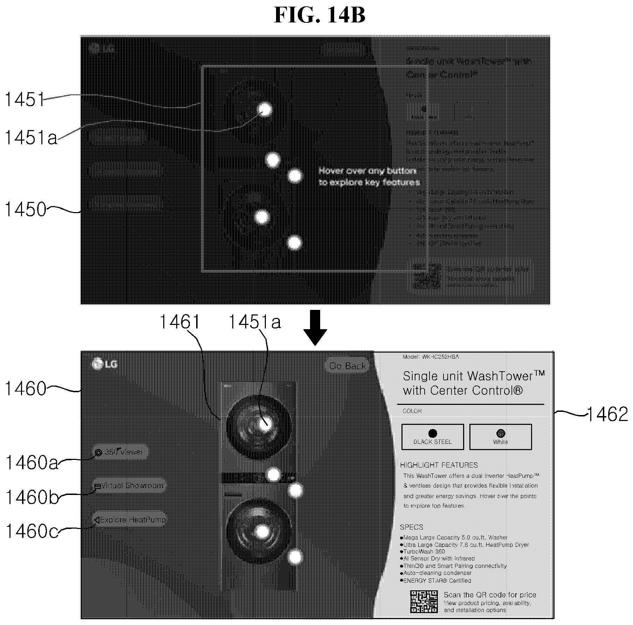

The processor 180 may sequentially display detailed information screens 1450, 1460 for providing detailed information of the clothes treatment device, as illustrated in FIG. 14B, upon receiving a user input selecting the detailed button 1411a.

The first detailed information screen 1450 may include an interaction guide 1451. The interaction guide 1451 may guide hovering inputs for a plurality of indicators 1451a that identify each object component of the 3D object corresponding to the clothes treatment device. Each indicator 1451 may be an identifier for providing information about a specific component of the clothes treatment device.

A hovering input may be a type of gesture input in which the user's finger is placed over the corresponding indicator (represented as a button in FIG. 14B) for a certain period of time.

The second detailed information screen 1460 may include an image 1461 corresponding to the clothes treatment device, a plurality of indicators 1451a, and detailed information 1462 including characteristic information and specification information of the clothes treatment device.

The second detailed information screen 1460 may further include a view menu 1460a for providing a 360-degree view, a showroom menu 1460b for placing a virtual 3D object corresponding to the clothes treatment device in a virtual showroom, and a function menu 1460c for providing a video of a specific function of the clothes treatment device.

The second detailed information screen 1460 may be another example of the screen 400 of FIG. 4. In this case, the view menu 1460a may correspond to the first menu 412 of FIG. 4, the showroom menu 1460b may correspond to the second menu 413 of FIG. 4, and the function menu 1460c may correspond to the third menu 414 or the fourth menu 415 of FIG. 4.

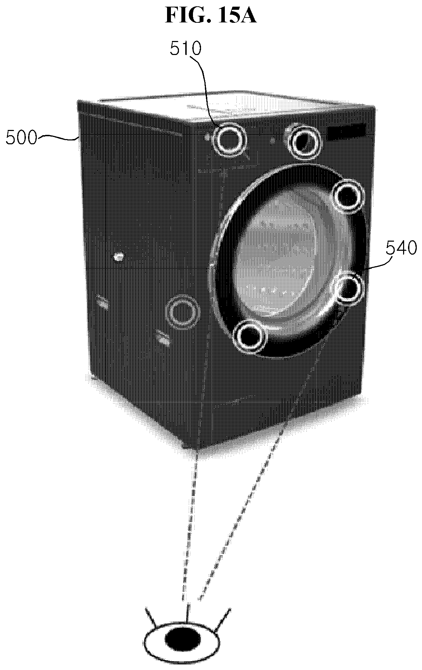

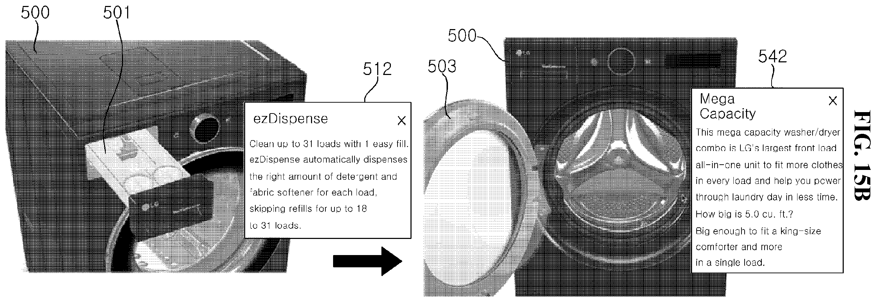

Next, FIGS. 15A and 15B will be described.

In an embodiment of the present disclosure, the direction of the user's gaze may be detected to help the user smoothly explore the 3D object 500 from various angles.

The processor 180 may track the user's gaze from an image of the user's eyes captured through the camera 121.

If the processor 180 detects that the user's gaze remains on the first indicator 510 for a certain period of time or longer, the processor 180 may determine that the first indicator 510 has been selected. The processor 180 may play a dispenser withdrawal animation in which the dispenser object component 501 corresponding to the dispenser is withdrawn according to the selection of the first indicator 510, and may display the first product guide 512 explaining the exDispense function. At the same time, the processor 180 may switch the view point so that the dispenser withdrawal animation is clearly visible, and may enlarge the dispenser object component 501 of the 3D object 500.

Afterwards, if the processor 180 detects that the user's gaze moves to the fourth indicator 540 and remains on the fourth indicator 540 for the certain period of time, the processor 180 may determine that the fourth indicator 540 has been selected.

When the fourth indicator 540 is selected, the processor 180 may display the fourth product guide 542 explaining the Mega Capacity function while playing a door open animation in which a door object component 504 corresponding to the door of the clothes treatment device opens. At the same time, the processor 180 may switch the viewpoint so that the door open animation is clearly visible and may enlarge the door object component 504 of the 3D object 500.

That is, the processor 180 may track the user's gaze, switch the viewpoint according to the user's gaze, and output an interaction result for an indicator located at a position corresponding to the user's gaze.

In this way, according to an embodiment of the present disclosure, the user may intuitively explore the 3D object with only the user's gaze, without any manipulation such as a mouse input or a gesture input, thereby improving the user experience.

In another embodiment, the processor 180 may detect the user's gaze direction and switch the first viewpoint to the second viewpoint that matches the detected gaze direction when the viewpoint of the 3D object 500 is fixed to the first viewpoint according to a hand gesture input or when the viewpoint is fixed to the first viewpoint according to activation of the indicator.

Meanwhile, FIGS. 15A and 15B describe an embodiment of switching the viewpoint by detecting the user's gaze tracking, but the viewpoint may also be switched by detecting the user's hand gesture.

When the user's hand gesture hovers over the first indicator 510 for a certain period of time, the processor 180 may display the first product guide 512 explaining the exDispense function while playing the dispenser withdrawal animation in which the dispenser object component 501 corresponding to the dispenser is withdrawn.

Thereafter, the processor 180 may switch the viewpoint and play the door open animation in which the door object component 504 corresponding to the door of the clothes treatment device opens when the user's hand gesture hovers over the fourth indicator 540 for the certain period of time.

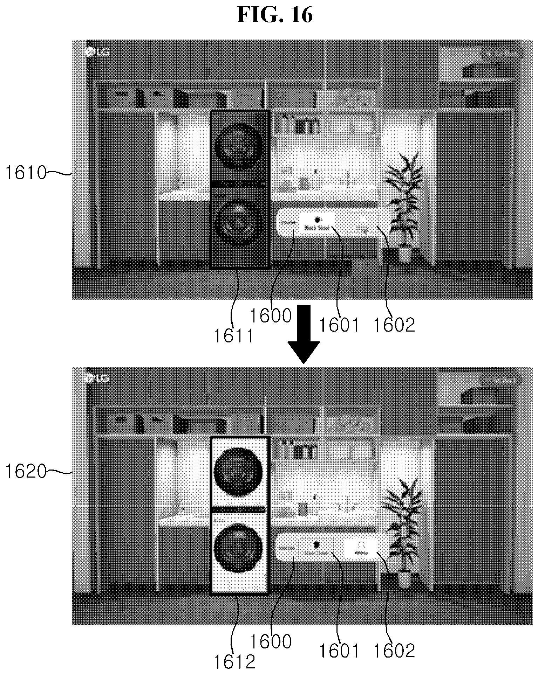

Next, FIG. 16 is described.

FIG. 16 is a drawing illustrating a 3D virtual showroom screen according to an embodiment of the present disclosure.

Referring to FIG. 16, a first showroom screen 1610 may include a 3D object 1611 placed in a virtual space of a virtual showroom and a property selection menu 1600.

The processor 180 may place the 3D object 1611 in a specific virtual space of a virtual showroom according to a user input. The processor 180 may set a property of the 3D object 1611 upon receiving the user input for the property selection menu 1600. The property may be any one of a color, a material, or a size.

For example, the property selection menu 1600 may include a black steel button 1601 and a white button 1602. When the black steel button 1601 is selected, the 3D object 1611 may be displayed in a black steel color. When the white button 1602 is selected, the processor 180 may display a second showroom screen 1620 including a 3D object 1612 having a white color.

In this way, according to an embodiment of the present disclosure, the properties of a 3D home appliance model may be changed and displayed according to interaction with a user, thereby obtaining a technical effect that allows the user to experience the product more realistically in a virtual space.

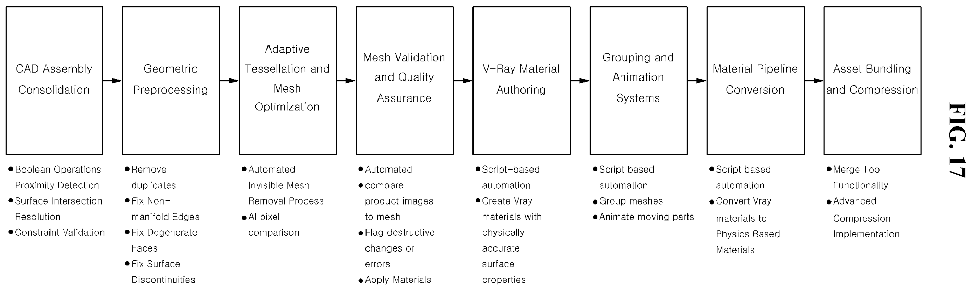

FIG. 17 is a diagram illustrating a process for generating a lightweight 3D object according to one embodiment of the present disclosure.

The eight steps illustrated in FIG. 17 may be performed by the processor 180 of the artificial intelligence device 100 or by the processor 260 of the AI server 200.

When the eight steps illustrated in FIG. 17 are performed by the processor 260 of the AI server 200, the generated 3D object may be transmitted to the artificial intelligence device 100 via the communication interface 210. The artificial intelligence device 100 may store the received 3D object in the memory 170.
1. CAD Assembly Consolidation: The CAD assembly consolidation step may involve integrating a plurality of CAD files corresponding to a plurality of components into a single assembly model. This process may address structural issues within the single assembly model through Boolean operations, proximity detection, surface intersection, and constraint validation.
2. Geometric Preprocessing: The geometric preprocessing step may be a step to correct geometric errors in the single assembly CAD model output from the CAD assembly integration step. The quality of the single assembly CAD model may be improved by removing duplicate elements, fixing non-manifold edges, fixing degenerate faces, and fixing surface discontinuities.
3. Adaptive Tessellation and Mesh Optimization: The adaptive tessellation and mesh optimization step may optimize the polygon count of a 3D model after geometric preprocessing has been completed. This process may efficiently reduce the mesh size of visually unimportant areas through an automated invisible mesh removal process and artificial intelligence AI pixel comparison, thereby reducing the size of the 3D model.
4. Mesh Validation and Quality Assurance: The mesh validation and quality assurance step may verify the optimized mesh model generated through the adaptive tessellation and mesh optimization stages. Automated systems may compare product images with the optimized mesh model to detect and correct any destructive changes or errors. Additionally, during this stage, default materials may be applied to each mesh that makes up the optimized mesh model.
5. V-Ray Material Authoring: The V-Ray material authoring step may be used to create materials for physically-based rendering PBR. This process may leverage script-based automation to generate V-Ray materials from mesh models with base materials applied. Furthermore, rendering quality may be improved by providing physically accurate surface properties.
6. Grouping and Animation Systems: The Grouping and Animation Systems step may be used to group moving parts on a mesh model with V-Ray materials applied and apply animations. Script-based automation groups meshes and animates moving parts to implement motion.
7. Material Pipeline Conversion: The material pipeline conversion step may be used to convert materials from models with V-Ray materials and animations into a rendering-ready format. Converting V-Ray materials to physically based materials ensures compatibility across various rendering environments.
8. Asset Bundling and Compression: The asset bundling and compression step may be used to package the final model into an optimal format compatible with various rendering environments. Utilizing the Merge Tool function and applying advanced compression techniques (Advanced Compression Implementation) minimizes the size of the final 3D model assets.

Through step 8, a lightweight 3D model (or 3D object) may be created.

According to an embodiment of the present disclosure, through a series of lightweighting and optimization processes, high-quality 3D models may be provided reliably and quickly even in limited environments such as web environments.

An artificial intelligence device according to one embodiment of the present disclosure may comprise a memory 170 configured to store a three-dimensional(3D) object representing an electronic device, wherein the 3D object is a lightweight object generated based on drawing data; a display 151 configured to display the 3D object; and a processor 180 configured to: display an indicator corresponding to a specific location of the 3D object on the display, receive a user input for the displayed indicator, and output an interaction result with the indicator based on the received user input.

Wherein the interaction result may comprise at least one of a switch of a view point indicating a view angle of the 3D object, a playback of an animation indicating a movement sequence of an object component that constitutes the 3D object and corresponds to the position of the indicator, a display of a text or an image.

The processor 180 may further play the animation while switching the view point according to the received user input, or play the animation after completing the switching of the view point.

The processor 180 may further play the animation repeatedly or adjust a playback speed of the animation if the user input is a motion input and the motion input is detected a certain number of times or more.

The processor 180 may further display the object component corresponding to the position of the indicator opaquely when the animation is played according to the user input, and display object components other than the object component transparently.

The processor 180 may further stop displaying the indicator during the playback of the animation.

Wherein the interaction result may further comprise a display of a sub indicator related to the indicator.

The processor 180 may further display the indicator corresponding to the specific position of the 3D object during the switch of the viewpoint.

Wherein the indicator may highlight the object component that constitutes the 3D object, with a specific shape.

The processor 180 may further display a plurality of indicators corresponding to a plurality of locations of the 3D object, and the plurality of indicators have different shapes depending on a type of the interaction result.

The processor 180 may further display a plurality of indicators corresponding to a plurality of positions of the 3D object, wherein the plurality of indicators include a first indicator and a second indicator, the processor 180 may display the first indicator corresponding to a visible object component among a plurality of object components constituting the 3D object in a first state at a specific viewpoint, and display the second indicator corresponding to an invisible object component in a second state at the specific viewpoint.

Wherein the second state may be a state where the second indicator is not displayed.

The processor 180 may further output the interaction result corresponding to the first indicator corresponding to the visible object component according to the received user input.

The processor 180 may further change the view point of the 3D object to a position where the state of the second indicator becomes the first state when the user input for the second indicator of the second state is received.

The processor 180 may further display a plurality of indicators corresponding to a plurality of positions of the 3D object at a specific viewpoint, and change the viewpoint so that the two indicators are separated when a distance between two of the plurality of indicators is less than a reference distance.

Wherein the user input may be a gesture input, the processor 180 may further display a gesture guide for interaction with the indicator on the display.

The processor 180 may further, when the viewpoint of the 3D object is fixed to a first viewpoint according to the user input or when the viewpoint is fixed to the first viewpoint according to an activation of the indicator, detect a gaze direction of a user to switch the first viewpoint to a second viewpoint that matches the detected gaze direction.

Wherein the 3D object may be an object generated based on a plurality of drawing data corresponding to each of a plurality of components constituting the electronic device, and be modeled to include a motion sequence for a grouped object component corresponding to a moving part among a plurality of parts.

The functions of the elements disclosed in the present invention may be implemented using circuits or processing circuits including general-purpose processors, special-purpose processors, integrated circuits, application-specific integrated circuits ASICs, existing circuits, and/or combinations thereof. A processor may be defined as a processing circuit or circuits including transistors and other circuits.

In the present invention, the circuits, units, or means may be hardware designed or programmed to perform the specified functions. The hardware may be the hardware disclosed in the present invention or other known hardware programmed or configured to perform the specified functions. If the hardware is a processor, which may be considered a type of circuit, the circuits, units, or means may be a combination of hardware and software, and the software may constitute the hardware and/or the processor.

The above-described present disclosure may be implemented as a computer-readable code on a medium in which a program is recorded. The computer-readable medium includes all kinds of recording devices in which data that may be read by a computer system is stored. Examples of the computer-readable medium include a hard disk drive HDD, a solid state disk SSD, a silicon disk drive SDD, a ROM, a RAM, a CD-ROM, a magnetic tape, a floppy disk, an optical data storage device, and the like. In addition, the computer may include the processor 180 of an artificial intelligence device.

## Claims

1. An artificial intelligence device (100), comprising:
a memory (170) configured to store a three-dimensional(3D) object representing an electronic device, wherein the 3D object is a lightweight object generated based on drawing data;
a display (151) configured to display the 3D object; and
a processor (180) configured to:
display an indicator corresponding to a specific location of the 3D object on the display,
receive a user input for the displayed indicator, and
output an interaction result with the indicator based on the received user input.

2. The artificial intelligence device (100) of claim 1, wherein the interaction result comprises at least one of:
a switch of a view point indicating a view angle of the 3D object,
a playback of an animation indicating a movement sequence of an object component that constitutes the 3D object and corresponds to the position of the indicator,
a display of a text, and/or
an image.

3. The artificial intelligence device (100) of claim 2, wherein the processor (180) is further configured to
play the animation while switching the view point according to the received user input, or play the animation after completing the switching of the view point.

4. The artificial intelligence device (100) of claim 2 or 3, wherein the processor (180) is further configured to:
play the animation repeatedly or adjust a playback speed of the animation if the user input is a motion input and the motion input is detected a certain number of times or more.

5. The artificial intelligence device (100) of one of claims 2 to 4, wherein the processor (180) is further configured to:
display the object component corresponding to the position of the indicator opaquely when the animation is played according to the user input, and
display object components other than the object component transparently.

6. The artificial intelligence device (100) of one of claims 2 to 5, wherein the processor (180) is further configured to:
display the indicator corresponding to the specific position of the 3D object during the switch of the viewpoint.

7. The artificial intelligence device (100) of one of claims 1 to 6, wherein the indicator highlights the object component that constitutes the 3D object, with a specific shape,
wherein the processor is further configured to:
display a plurality of indicators corresponding to a plurality of locations of the 3D object, and the plurality of indicators have different shapes depending on a type of the interaction result.

8. The artificial intelligence device (100) of one of claims 1 to 6, wherein the processor (180) is further configured to:
display a plurality of indicators corresponding to a plurality of positions of the 3D object, wherein the plurality of indicators include a first indicator and a second indicator,
display the first indicator corresponding to a visible object component among a plurality of object components constituting the 3D object in a first state at a specific viewpoint, and
display the second indicator corresponding to an invisible object component in a second state at the specific viewpoint.

9. The artificial intelligence device (100) of claim 8, wherein the processor (180) is further configured to:
change the view point of the 3D object to a position where the state of the second indicator becomes the first state when the user input for the second indicator of the second state is received.

10. The artificial intelligence device (100) of one of claims 1 to 6, wherein the processor (180) is further configured to:
display a plurality of indicators corresponding to a plurality of positions of the 3D object at a specific viewpoint, and
change the viewpoint so that the two indicators are separated when a distance between two of the plurality of indicators is less than a reference distance.

11. The artificial intelligence device (100) of one of claims 1 to 10, wherein the user input is a gesture input,
wherein the processor is further configured to display a gesture guide for interaction with the indicator on the display.

12. The artificial intelligence device (100) of one of claims 1 to 11, wherein the processor (180) is further configured to:
when the viewpoint of the 3D object is fixed to a first viewpoint according to the user input or when the viewpoint is fixed to the first viewpoint according to an activation of the indicator, detect a gaze direction of a user to switch the first viewpoint to a second viewpoint that matches the detected gaze direction.

13. The artificial intelligence device (100) of one of claims 1 to 12, wherein the 3D object is an object generated based on a plurality of drawing data corresponding to each of a plurality of components constituting the electronic device, and is modeled to include a motion sequence for a grouped object component corresponding to a moving part among a plurality of parts.

14. A method for searching a virtual product using a three-dimensional object of an artificial intelligence device, the method comprising:
storing a three-dimensional(3D) object representing an electronic device, wherein the 3D object is a lightweight object generated based on drawing data;
displaying the stored 3D object;
displaying an indicator corresponding to a specific location of the 3D object;
receiving a user input for the displayed indicator; and
outputting an interaction result with the indicator based on the received user input.

15. A non-transitory recording medium storing computer-readable commands that, when executed by an artificial intelligence device, cause the artificial intelligence device to perform operations,
wherein the operations comprises:
storing a three-dimensional(3D) object representing an electronic device, wherein the 3D object is a lightweight object generated based on drawing data;
displaying the stored 3D object;
displaying an indicator corresponding to a specific location of the 3D object;
receiving a user input for the displayed indicator; and
outputting an interaction result with the indicator based on the received user input.
